# EUROPÄISCHE PATENTSCHRIFT

(11) **EP 4 093 600 B1**
(45) Veröffentlichungstag und Bekanntmachung des Hinweises auf die Patenterteilung: **09.07.2025**
(21) Anmeldenummer: 21731883.1
(22) Anmeldetag: 17.05.2021
(51) Int. Cl.: B29C 70/16, B29C 70/48, B29B 15/12

(54) **VERFAHREN ZUR HERSTELLUNG EINES FASERKUNSTSTOFFVERBUNDS**
METHOD FOR PRODUCING A FIBER-PLASTIC COMPOSITE MATERIAL
PROCÉDÉ DE FABRICATION D'UN MATÉRIAU COMPOSITE RENFORCÉ PAR DES FIBRES

(30) Priorität: 18.05.2020 AT 504352020
(43) Veröffentlichungstag der Anmeldung: 30.11.2022
(73) Patentinhaber: Fibionic GmbH, 6065 Thaur (AT)
(72) Erfinder: Rettenwander, Thomas, 6065 Thaur (AT); Mandler, Johannes, 6065 Thaur (AT)
(74) Vertreter: Schwarz & Partner Patentanwälte GmbH
(86) Internationale Anmeldenummer: PCT/AT2021/060171
(87) Internationale Veröffentlichungsnummer: WO 2021/232079

(56) Entgegenhaltungen:
- EP-A2- 1 177 871
- WO-A1-2011/131664
- DE-A1- 102007 054 424
- DE-A1- 102016 103 979
- DE-B4- 102010 045 428
- US-A- 5 073 413

## Beschreibung

Die vorliegende Erfindung betrifft ein Verfahren zur Herstellung eines Faserkunststoffverbunds mit Endlosfasern oder Langfasern. Weiters betrifft die Erfindung ein Bearbeitungswerkzeug, umfassend ein Formwerkzeug und zumindest einen in das Formwerkzeug eingelassenen Strömungskanal.

### Hintergrund der Erfindung

Faserkunststoffverbunde mit Endlos- bzw. Langfasern haben sehr gute mechanische Eigenschaften. Besonders die guten Verhältnisse von Festigkeit und Steifigkeit zu Dichte machen diese Werkstoffe zum idealen Leichtbauwerkstoff.

Da die Herstellung solcher Faserkunststoffverbunde mit Endlos- bzw. Langfasern aufwändig und zeitintensiv ist und die eingesetzten Fasern in der Regel teuer sind, werden sie derzeit meist nur im Hochtechnologiebereich eingesetzt.

Faserverbundwerkstoffe sind in ihrem mechanischen Verhalten richtungsabhängig, wobei die mechanischen Eigenschaften naturgemäß in Faserrichtung am größten sind. Abweichend von dieser Faserrichtung ergeben sich wesentlich schlechtere Eigenschaften.

Bei herkömmlichen Herstellungsverfahren werden die Endlos- oder Langfasern mit einem festen Faserwinkel im Bauteil abgelegt. Da Spannungszustände in komplexen Bauteilen multiaxial und die Eigenschaften der Fasern richtungsabhängig sind, werden Verbundwerkstoffe aus mehreren unterschiedlichen Schichten mit unterschiedlichen Faserwinkeln aufgebaut, welche man als "constant stiffness design" bezeichnet. Allerdings hat dies zur Folge, dass die faserspezifischen Eigenschaften nicht vollends ausgenützt werden.

Jüngere Herstellungsverfahren versuchen durch eine gezielte Ausrichtung der Fasern in Belastungsrichtung ("variable stiffness design") diese Nachteile zu umgehen. Mit diesen Herstellungsverfahren können Fasern gekrümmt sein und müssen nicht mehr zwangsläufig gerade in Bauteilen vorliegen. Diese belastungsgerechte Ausrichtung der Fasern hat zur Folge, dass wesentlich weniger Fasern eingesetzt werden müssen, um dieselben Materialeigenschaften in Belastungsrichtung zu erzielen, womit Masse und Kosten eingespart werden können.

Herstellungsverfahren für Faserkunststoffverbunde mit Endlos- bzw. Langfasern mit gezielter Ausrichtung der Fasern in Belastungsrichtung sind bekannt und werden in der Industrie auch bereits angewandt. Das sogenannte *Tailored Fibre Placement* bringt einzelne Faserstränge mittels Sticktechnik auf ein Substrat auf. Beliebige Faserverläufe sind damit möglich. Das *Tailored Patch Placement* legt Faserzuschnitte robotergestützt auf ein Substrat ab. Die Fasern sind durch den Prozess nicht mehr endlos, können aber ebenso in komplexen Verläufen abgelegt werden. Neben diesen Verfahren gibt es noch weitere, die meist robotergestützt Fasern entsprechend eines Lastflusses oder entsprechend eines sonstigen Auslegungskriteriums ablegen. Diese Verfahren zeichnet eine maximale Materialeffizienz und minimaler Verschnitt aus. Jedoch ist die Herstellung dieser Strukturen sehr zeitintensiv und es ist nicht möglich Bauteile für den Massenmarkt herzustellen.

DE 10 2007 054 424 A1 beschreibt ein Verfahren zur Herstellung eines Faserkunststoffverbunds, wobei Fasern in eine Form eingeblasen werden. Die Faserrichtung wird über die Blasrichtung einer Düse festgelegt und kann dementsprechend nur in engen Grenzen variiert werden.

In DE 10 2010 045 428 B4 wird ein Verfahren zur Herstellung eines Faserkunststoffverbunds beschrieben, wobei Fasern mittels eines Luftstroms zu einem Verarbeitungsort transportiert werden. Dieser Transport geschieht durch einen Transportkanal, wobei während des Transports der Fasern Matrixharz hinzugefügt wird. Eine Weiterverarbeitung und Formgebung erfolgt mittels konventioneller Herstellungsmethoden.

EP 1 177 871 B1 beschreibt Faserspritzen, das durch einen ungerichteten Luftstrom Fasern auf eine offene Werkzeugform aufbringt. Eine exakte Positionierung von Fasern im offenen Werkzeug ist nicht möglich.

DE 10 2016 103 979 A1 beschreibt ein Verfahren zur Herstellung eines Strukturhohlbauteils sowie das Strukturhohlbauteil selbst. Das Verfahren ist dadurch gekennzeichnet, dass ein auswaschbarer Formkern mit Fasern umwickelt wird und in einer Bohrung in diesem Formkern mit Fasern, die durch eine Nadel oder durch einen Luftstrom positioniert werden, eine Strebe im Hohlbauteil erzeugt wird.

Bezugnehmend auf Herstellverfahren zeigt der bisher bekannte Stand der Technik zwar grundsätzlich das Einblasen von Fasern in Kanäle oder allgemein in Formkavitäten; allerdings lassen sich damit nur spezielle Hohlbauteile beziehungsweise keine Bauteile mit gesicherter Faserausrichtung herstellen.

### Kurzbeschreibung der Erfindung

Die bislang eingesetzten Verfahren zur Herstellung von Faserverbundkunststoffen mit gezielter Ausrichtung der Fasern in Belastungsrichtung beruhen auf (zeitlich) aufwändigen Ablegekonzepten oder geometrisch ungenauen und auf eine Richtung beschränkten Einblasverfahren.

Aufgabe der vorliegenden Erfindung ist daher die Bereitstellung eines Verfahrens zur Herstellung von Faserverbundkunststoffen, welches eine gezielte Ausrichtung der Fasern - gegebenenfalls auch mit Krümmungen - in Belastungsrichtung erlaubt und kurze Herstellungszeiten ermöglicht.

Gelöst wird diese Aufgabe durch ein Verfahren gemäß Anspruch 1.

Während in DE 10 2010 045 428 B4 zwar ein Kanal beschrieben wird, dient dieser nur der Bereitstellung und der Aufbereitung zu einem Verbundwerkstoff, welcher dann mit konventionellen Verfahren verarbeitet werden kann. Die vorliegende Erfindung nutzt die Kanäle, um eine exakte Positionierung von Fasern in einem Werkzeug zu ermöglichen.

Die werkzeuggebundenen Kanäle sind verantwortlich für die Faserorientierung. Durch die Strömungskanäle wird die exakte Position der Endlosfasern oder Langfasern im späteren Faserkunststoffverbund, welcher meist ein Halbzeug darstellt, bestimmt. Die Strömungskanäle können geradlinig verlaufen, bevorzugt können sie jedoch in beliebig komplexer Form vorliegen. Besonders bevorzugt sind die Strömungskanäle mindestens einfach gekrümmt.

In einer Ausführungsvariante ist vorgesehen, dass die Endlosfasern oder Langfasern im Strömungskanal durch einen Fluidstrom positioniert werden.

Der Fluidstrom zum Positionieren der Fasern wird durch ein Druckgefälle im jeweiligen Strömungskanal erzeugt. Dieses Druckgefälle kann zum Beispiel durch einen relativen Überdruck auf der Einströmseite des Fluids oder durch einen relativen Unterdruck auf der Ausströmseite des Fluids oder durch beides gleichzeitig erzeugt werden. Das Fluid ist gewöhnlich Luft, kann aber ebenso ein Inertgas oder Edelgas sein. Ebenso können auch verdampfende Flüssigkeiten als Fluid eingesetzt werden. Das Fluid kann temperiert oder untemperiert sein.

Im einfachsten Fall handelt es sich bei den Endlosfasern oder Langfasern um einfache Rovings nur aus Verstärkungsfasern. Bevorzugt sind die Endlosfasern oder Langfasern ein Hybridroving (d.h. ein Roving aus Verstärkungsfaser und einem Matrix-Material), besonders bevorzugt ein Commingled Yarn (Roving aus Verstärkungsfasern und Kunststoff-Fasern als Matrix-Material).

Die Langfasern bzw. Endlosgarne bestehen entweder aus reinen endlosen bzw. gebundenen langen Fasern oder aus einem Verbund aus Fasern und Matrix, wobei die Matrix vorzugsweise in Form von Polymerfasern, Polymerpulvern oder Harzen vorliegen kann. Verstärkungsfasern können Carbon-, Glas-, Aramidfaser, sonstige polymere, metallische und keramische Fasern sowie Naturfasern umfassen.

Alternativ dazu können auch Langfasern bzw. Endlosgarne zu anderen Zwecken eingebracht werden. Die Langfasern bzw. Endlosgarne könnten z.B. dekorative Zwecke erfüllen. Eine alternative Ausführungsform sieht vor, dass die Langfasern bzw. Endlosgarne für thermische Zwecke eingebracht werden. Das Einbringen von Langfasern bzw. Endlosgarne beschränkt sich in diesen Ausführungsformen nicht nur auf die Verstärkungswirkung. Selbstverständlich sind auch Kombinationen aus diesen Funktionen denkbar.

Das Formwerkzeug weist meist Werkzeughälften auf. Die Kontaktfläche zwischen den Werkzeughälften kann eine ebene Fläche darstellen oder komplex gekrümmt vorliegen. Ist die Kontaktfläche eine ebene Fläche, werden mit dem Verfahren meist Halbzeuge hergestellt, die im weiteren Schritt umgeformt und mit Matrix ummantelt werden sollen. Ist die Verstärkung in einem späteren Bauteil nur zweidimensional muss nur mehr ummantelt werden. Ist die Kontaktfläche eine gekrümmte Fläche können damit die Umformgrade für ein späteres Bauteil verringert werden oder auch direkt die Verstärkungsgeometrie für das Bauteil hergestellt werden. Im letzteren Fall ist nur mehr ein Ummanteln notwendig.

Ummanteln bezeichnet das Einbetten der Fasern in eine Matrix, wobei nur punktuell oder auch großflächig ummantelt werden kann. Das Ummanteln dient zur Verfestigung der Rovings untereinander bzw. zur Fixierung auf einem Substrat. Die Fixierung kann direkt im Werkzeug erfolgen. Dazu können beheizte Stempel durch Aufbringen eines Drucks zur Verfestigung der Rovings untereinander bzw. zur Konsolidierung auf einem Substrat eingesetzt werden. Alternative Möglichkeiten zur Verfestigung sind Druckluft, Ansaugen durch ein Vakuum oder auch flexible Schläuche, die in den Kanälen liegen und aufgeblasen werden. Je nach verwendetem Matrixwerkstoff ist eine Beheizung notwendig.

In einer weiteren nicht beanspruchten Variante kann das Verfahren direkt in einem Spritzgießprozess, Pressprozess, Thermoformprozess oder einem anderen Verarbeitungsprozess integriert werden. Eine Verfestigung der positionierten Fasern erfolgt direkt im Prozess, beispielsweise durch die Befüllung der Bauteilkontur mit der Spritzgießmasse.

Das Ummanteln findet außerhalb des Werkzeuges statt. Dazu wird ein flächiger Greifer die durch die Strömungskanäle des Werkzeugs ausgerichteten Rovings elektrostatisch, pneumatisch, mittels Unterdruck oder durch Adhäsion greifen und einer Ummantelungsstation zuführen. Dort erfolgt eine Verfestigung der Rovings nur untereinander oder eine Verfestigung der Rovings untereinander und zusätzlich auf einem Substrat.

Bevorzugt laufen alle Schritte (Bereitstellen eines Formwerkzeugs; Einleiten der Endlosfaser oder Langfaser in den Strömungskanal; Positionieren der Endlosfaser oder Langfaser im Strömungskanal durch ein Druckgefälle im Strömungskanal; und Ummantelung der Endlosfasern oder Langfasern mit einer Matrix) in einem Formwerkzeug ab.

Das Substrat kann selbst ein Halbzeug in Folien- oder Plattenform sein. Vorzugsweise werden Folien eingesetzt, die eine gute Haftung zum Matrixmaterial gewährleisten. Nur beispielhaft seien hier aufgezählt: Wird ein Commingled Yarn mit PP Matrix verwendet, so ist es zweckdienlich, eine Folie oder Platte aus PP als Substrat einzusetzen. Wird ein Commingled Yarn mit PA6 Matrix verwendet, so kann eine Metallplatte mit entsprechendem Haftvermittler oder auch ein Prepreg mit PA6 Matrix eingesetzt werden. Des Weiteren kann das Substrat bereits eine dreidimensionale Struktur sein, die durch das Anbringen der Fasern verstärkt wird.

In einem weiteren Aspekt betrifft die Erfindung ein Bearbeitungswerkzeug gemäß Anspruch 5.

Die Form der Strömungskanäle weist bevorzugt zumindest eine Krümmung auf. Der Strömungskanal bestimmt die Strömungsrichtung und bestimmt somit die Orientierung des Faserstranges im Halbzeug bzw. Bauteil.

Das Formwerkzeug besteht bevorzugt aus zwei Werkzeughälften, einem Ober- und einem Unterteil. Die Strömungskanäle können in das Unterteil oder das Oberteil oder in Ober- und Unterteil eingearbeitet sein. In einem Werkzeug kann sowohl nur ein einzelner Strömungskanal als auch mehrere Strömungskanäle eingearbeitet sein, die mit Rovings versorgt werden.

In einer Ausführungsvariante ist vorgesehen, dass das Formwerkzeug zwei Werkzeughälften aufweist, wobei der Strömungskanal von beiden Werkzeughälften gebildet wird.

Die Kontaktfläche zwischen den Werkzeughälften kann eine ebene Fläche darstellen oder komplex gekrümmt vorliegen. Ist die Kontaktfläche eine ebene Fläche, werden mit dem Werkzeug bevorzugt Halbzeuge hergestellt, die im weiteren Schritt umgeformt und ummantelt werden müssen. Ist die Verstärkung in einem späteren Bauteil nur zweidimensional, muss nur mehr ummantelt werden. Ist die Kontaktfläche eine gekrümmte Fläche, können damit die Umformgrade für ein späteres Bauteil verringert werden oder auch direkt die Verstärkungsgeometrie für das Bauteil hergestellt werden. Im letzteren Fall ist nur mehr ein Ummanteln notwendig.

Bevorzugt ist vorgesehen, dass das Formwerkzeug mehrere Strömungskanäle aufweist, und die Speisung durch eine oder mehrere ortsfeste Düsen geschieht. Die Düsen bewegen sich nur normal zur Andockfläche weg, um die Möglichkeit zu bieten die Fasern abzutrennen.

Als Material für das Werkzeug können Stähle, Aluminium und andere Metalle eingesetzt werden. Ebenso können Kunststoffe Werkzeugmaterial sein. Es ist auch möglich, dass einer der beiden Werkzeugteile das später beschriebene Substrat selbst oder auch der flächige Greifer zur Abnahme der positionierten Rovings sein kann.

Der Querschnitt eines Kanals kann beliebige Form aufweisen. Somit kann er rund, rechteckig, oder sonst eine Form aufweisen. Einziges Kriterium ist es, dass seine Querschnittsfläche gleich oder - was bevorzugt ist - größer als die Querschnittsfläche der festen Bestandteile des Rovings ist.

In einem weiteren Aspekt betrifft die Erfindung ein Bearbeitungswerkzeug für eine Kunststoffverarbeitungsanlage, umfassend ein Formwerkzeug und zumindest einen in das Formwerkzeug eingelassenen Strömungskanal, wobei dem Strömungskanal eine Fluiddüse zugeordnet ist. Bevorzugt ist vorgesehen, dass die Kunststoffverarbeitungsanlage eine Spritzgießmaschine ist.

### Detaillierte Beschreibung der Erfindung

Nachfolgend wird die Erfindung anhand von Beispielen und Figuren näher erläutert.
- Fig. 1: zeigt schematisch das Unterteil eines Formwerkzeugs mit Strömungskanälen.
- Fig. 2: zeigt schematisch das Unterteil eines Formwerkzeugs gemäß Fig. 1 mit einem transparent dargestellten Oberteil des Formwerkzeugs und die den Strömungskanälen zugeordneten Düsen.
- Fig. 3: zeigt das Formwerkzeug von Fig. 2 mit Düsen und Endlosfasern.

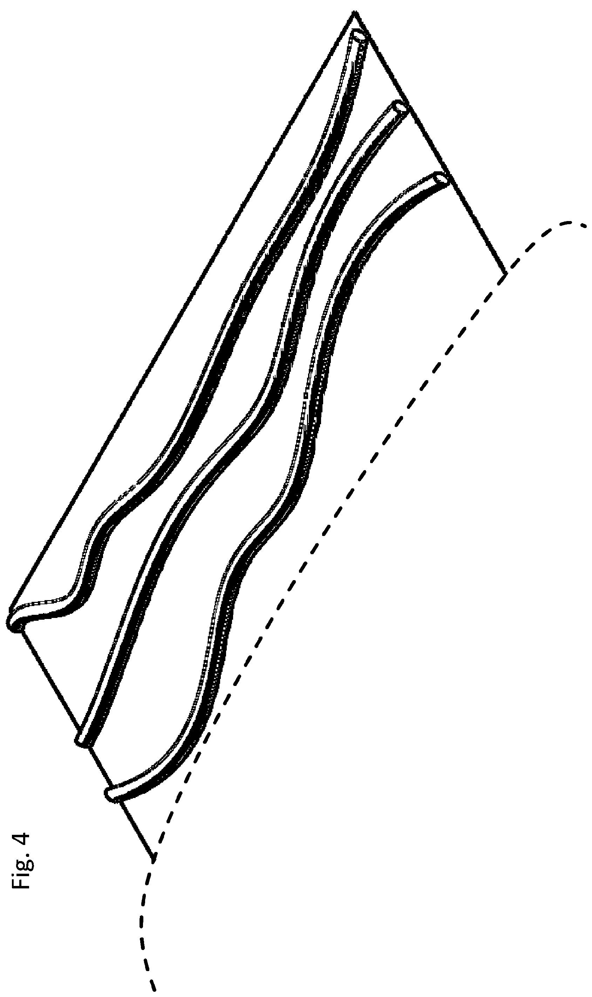

- Fig. 4: zeigt ein Substrat mit abgelegten Endlosfasern.
- Fig. 5: zeigt schematisch den gesamten Aufbau eines erfindungsgemäßen Bearbeitungswerkzeugs für eine Kunststoffverarbeitungsanlage.

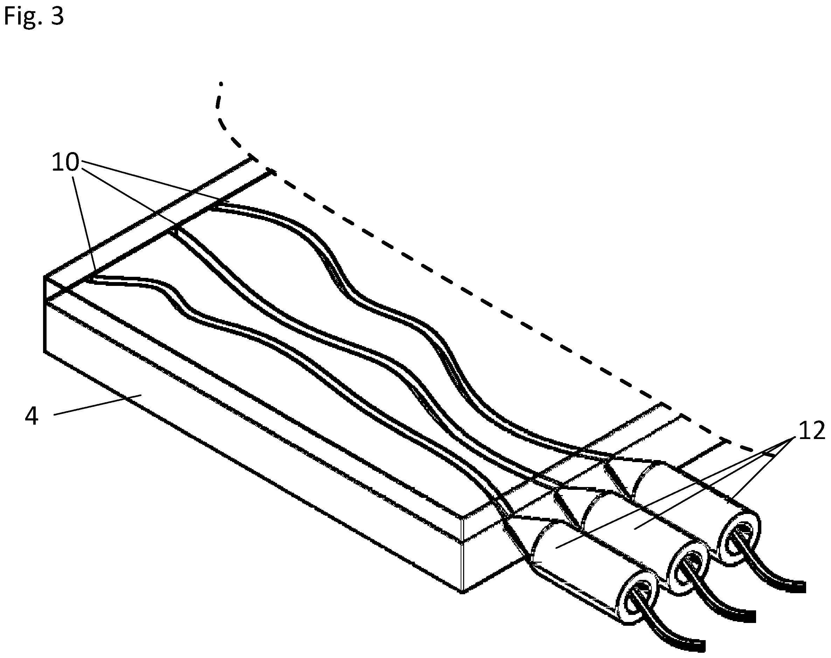

Das erfindungsgemäße Verfahren sowie das erfindungsgemäße Bearbeitungswerkzeug sind anhand der Figuren dargestellt. Da die Figuren und Verfahrensschritte zusammenhängen, werden alle Figuren gemeinsam beschrieben. In Fig. 3 ist das Bearbeitungswerkzeug gezeigt. Dieses umfasst ein Formwerkzeug mit zwei Werkzeughälften. Die beiden Werkzeughälften bilden die Strömungskanäle.

Jedem Strömungskanal 10 ist beispielhaft eine Fluiddüse 12 zugeordnet, wobei die Fluiddüse ein Faserreservoir für Endlosfasern aufweist.

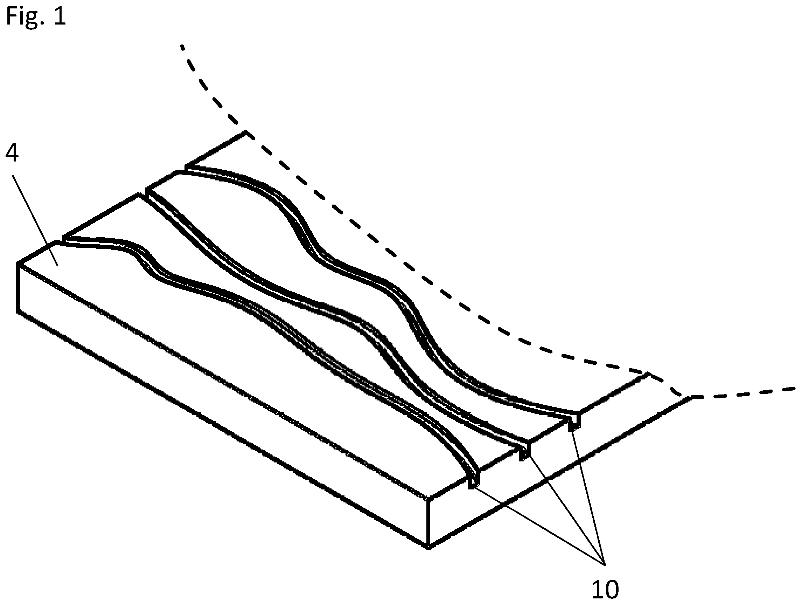

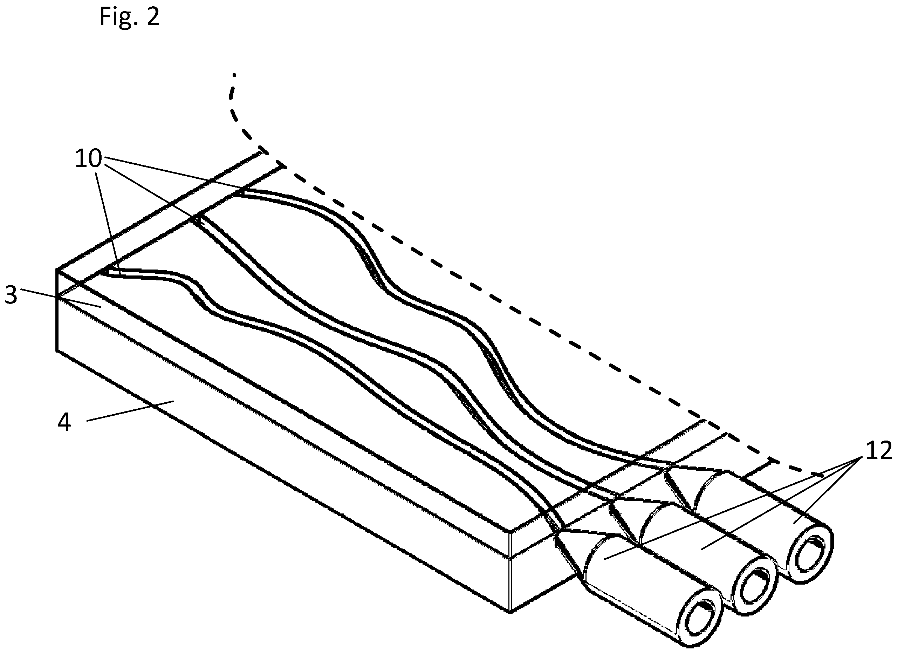

Für das erfindungsgemäße Verfahren zur Herstellung eines Faserkunststoffverbunds mit Endlosfasern oder Langfasern, wird zunächst ein Formwerkzeug mit einer Werkzeughälfte umfassend mindestens einen Strömungskanal bereitgestellt. Im Beispiel der Fig. 1 sind drei Strömungskanäle 10 gezeigt, die außerdem noch unterschiedlich gekrümmt sind. Die zweite Werkzeughälfte 3 wird nun auf die erste Werkzeughälfte 4 positioniert und Düsen 12 werden angelegt (Fig. 2). Anschließend werden Endlosfasern oder Langfasern in die Strömungskanäle über die Düsen eingeleitet. die Endlosfasern werden durch ein Druckgefälle im Strömungskanal positioniert (Fig. 3). Die obere Werkzeughälfte kann z.B. auch ein Kunststoffsubstrat sein, sodass die Endlosfasern mit Hilfe von zum Beispiel Stempeln im Formwerkzeug auf dem Substrat fixiert werden.

Die in dem Verfahren verwendeten Fasern werden durch Düsen bereitgestellt. Die Faserabschnitte, die im Werkzeug positioniert werden sollen, befinden sich in den Düsen in Reservoirs, die zur Umgebung dicht verschlossen sind. Die Kanäle werden durch diese Düsen versorgt. Wird das Druckgefälle erzeugt, ist die Düse und das Werkzeug, abgesehen von Einström-und Ausströmöffnungen, dicht verschlossen, um den gewünschten Fluidstrom in den Werkzeugkanälen zu erzeugen. Sind die Fasern im Werkzeug positioniert, hebt die Düse vom Werkzeug ab und es werden die Rovings zwischen Werkzeug und Düse durchtrennt. Das Trennen kann sowohl mechanisch als auch durch Abtragen (zum Beispiel thermisch) erfolgen.

Eine Weiterverarbeitung der hergestellten Halbzeuge kann durch Spritzgießen erfolgen. Die Halbzeuge können in bereits umgeformter Form durch Spritzgießen funktionalisiert werden und beliebige Bauteile dadurch hergestellt werden.

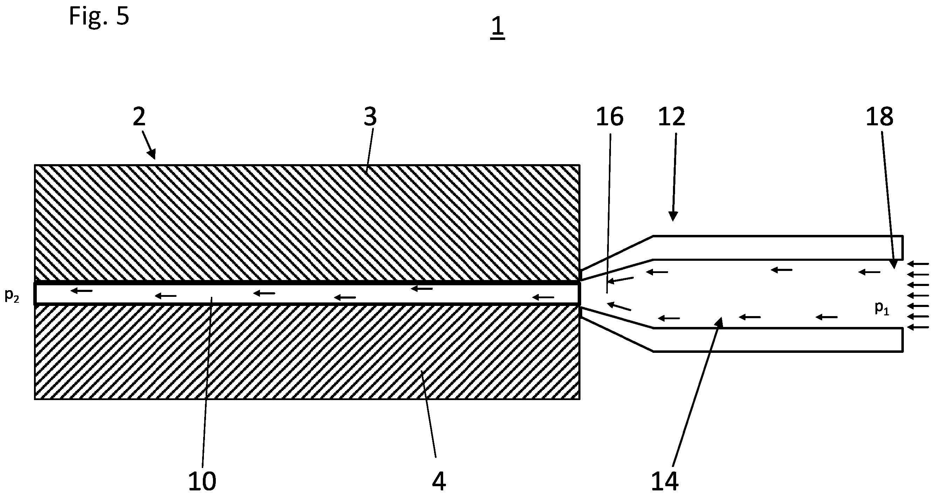

In Fig. 5 ist Bearbeitungswerkzeug 1 gemäß der Erfindung zur Durchführung des Verfahrens verdeutlicht. Dieses umfassend ein Formwerkzeug 2 mit zwei Werkzeughälften 3, 4, einer oberen Werkzeughälfte 3 und einer unteren Werkzeughälfte 4. Im Formwerkzeug 2 ist ein Strömungskanal 10 eingelassen. Dieser Strömungskanal wird in der unteren Werkzeughälfte 4 gebildet. Dem Strömungskanal 10 ist eine Fluiddüse 12 zugeordnet, wobei die Fluiddüse 12 ein Faserreservoir 14 für Endlosfasern 16 in Form eines Rovings aufweist. Am Eingang 18 der Fluiddüse 12 herrscht ein Druck p₁, welcher höher ist als der Druck p₂ im Strömungskanal 10. Durch das so entstehende Druckgefälle Δp = p₁ - p₂ wird die Endlosfaser 16 in den Strömungskanal 10 eingeleitet.

## Patentansprüche

1. Verfahren zur Herstellung eines Faserkunststoffverbunds mit gesicherter Faserausrichtung, wobei Endlosfasern (16) oder Langfasern ausgerichtet und mit einer Matrix ummantelt werden, **gekennzeichnet durch** die Schritte
a) Bereitstellen eines Formwerkzeugs (2), umfassend mindestens einen Strömungskanal (10),
b) Einleiten der Endlosfasern (16) oder Langfasern in den mindestens einen Strömungskanal (10),
c) Positionieren und Ausrichten der Endlosfasern (10) oder Langfasern im mindestens einem werkzeuggebundenem Strömungskanal (10) durch ein Druckgefälle (Δp) im Strömungskanal (10),
d) Zuführen der ausgerichteten Endlosfasern (10) oder Langfasern an eine Ummantelungsstation außerhalb des Werkzeugs mittels eines flächigen Greifers, wobei der flächige Greifer die Endlosfasern (10) oder Langfasern greift und der Ummantelungsstation elektrostatisch, pneumatisch, mittels Unterdruck oder durch Adhäsion zuführt, und
e) Ummantelung der Endlosfasern (16) oder Langfasern mit einer Matrix.

2. Verfahren nach Anspruch 1, **dadurch gekennzeichnet, dass** die Endlosfasern (16) oder Langfasern im Strömungskanal (10) durch einen Fluidstrom positioniert werden.

3. Verfahren nach Anspruch 1 oder Anspruch 2, **dadurch gekennzeichnet, dass** eine Fixierung des Faserverlaufs innerhalb des Formwerkzeuges (2) oder außerhalb des Formwerkzeuges (2) auf einem Trägersubstrat erfolgt.

4. Verfahren nach einem der Ansprüche 1 bis 3, **dadurch gekennzeichnet, dass** Endlosfasern (16) oder Langfasern in mehrere Strömungskanäle (10) eingeleitet werden.

5. Bearbeitungswerkzeug (1), umfassend ein Formwerkzeug (2) und zumindest einen in das Formwerkzeug (2) eingelassenen Strömungskanal (10), wobei jedem Strömungskanal (10) mindestens eine Fluiddüse (12) zugeordnet ist, wobei die Fluiddüse (12) ein Faserreservoir (14) für Endlosfasern (16) oder Langfasern aufweist, wobei eine Ummantelungsstation und ein flächiger Greifer zum Greifen von im Werkzeug ausgerichteten Endlosfasern (16) oder Langfasern vorgesehen ist, wobei der flächige Greifer derart ausgebildet ist, dass er die ausgerichteten Endlosfasern (16) oder Langfasern elektrostatisch, pneumatisch, mittels Unterdruck oder mittels Adhäsion greift.

6. Bearbeitungswerkzeug nach Anspruch 5, **dadurch gekennzeichnet, dass** das Formwerkzeug (2) zwei Werkzeughälften (3, 4) aufweist, wobei der Strömungskanal (10) von beiden Werkzeughälften (3, 4) gebildet wird.

7. Bearbeitungswerkzeug nach Anspruch 5 oder Anspruch 6, **dadurch gekennzeichnet, dass** der mindestens eine Strömungskanal (10) die Ausrichtung für Endlosfasern (16) oder Langfasern aus dem Faserreservoir (14) vorgibt.

8. Bearbeitungswerkzeug nach einem der Ansprüche 5 bis 7, **dadurch gekennzeichnet, dass** das Formwerkzeug (2) mehrere Strömungskanäle (10) aufweist.

9. Bearbeitungswerkzeug nach einem der Ansprüche 5 bis 8, **dadurch gekennzeichnet, dass** zumindest einem Strömungskanal (10) eine Pumpe zugeordnet ist.

10. Bearbeitungswerkzeug nach Anspruch 8 oder Anspruch 9, **dadurch gekennzeichnet, dass** die Fluiddüse (12) eine Bewegungseinheit aufweist und von einem Strömungskanal (10) zum nächsten Strömungskanal (10) bewegbar ist.

## Claims

1. Method for manufacturing a fibre-plastic composite with a secured fibre orientation, wherein continuous fibres (16) or long fibres are oriented and sheathed with a matrix, **characterised by** the following steps
a) providing a mold (2) comprising at least one flow channel (10)
b) introducing the continuous fibres (16) or long fibres into the at least one flow channel (10),
c) positioning and orienting the continuous fibres (10) or long fibres in the at least one flow channel (10) by way of a pressure gradient (Δp) in the flow channel (10),
d) supplying the oriented continuous fibres (10) or long fibres to a sheathing station outside the mold by means of a flat gripper, wherein the flat gripper grips the continuous fibres (16) or long fibres electrostatically, pneumatically, by means of negative pressure or by adhesion and supplies them to the sheathing station, and
e) sheating the continuous fibres (16) or long fibres with a matrix

2. Method according to claim 1, **characterised in that** the continuous fibres (16) or long fibres are positioned in the flow channel (10) by a fluid flow.

3. Method according to claim 1 or claim 2, **characterised in that** a fixation of the fibre orientation occurs inside the moulding tool (2) or outside the moulding tool (2) on a carrier substrate.

4. Method according to one of claims 1 to 3, **characterised in that** continuous fibres (16) or long fibres are introduced into a plurality of flow channels (10).

5. Processing tool (1), comprising a mold (2) and at least one flow channel (10) into the mold (2), wherein at least one fluid nozzle (12) is allocated to each flow channel (10), wherein the fluid nozzle (12) has a fibre reservoir (14) for continuous fibres (16) or long fibres, wherein a sheathing station and a flat gripper are provided for gripping continuous fibres (16) or long fibres oriented in the mold, wherein the flat gripper is designed in such a way that it grips the oriented continuous fibres (16) or long fibres electrostatically, pneumatically, by means of negative pressure or by means of adhesion.

6. Processing tool according to claim 5, **characterised in that** the mold (2) has two tool halves (3, 4), wherein the flow channel (10) is formed by both tool halves (3, 4).

7. Processing tool according to claim 5 or claim 6, **characterised in that** the at least one flow channel (10) dictates the orientation for continuous fibres (16) or long fibres from the fibre reservoir (14).

8. Processing tool according to one of the claims 5 to 7, **characterised in that** the mold (2) has a plurality of flow channels (10).

9. Processing tool (1) according to one of the claims 5 to 8, **characterised in that** a pump is allocated to at least one flow channel (10).

10. Processing tool (1) according to claim 8 or claim 9, **characterised in that** the fluid nozzle (12) has a moving unit and is movable from one flow channel (10) to another flow channel (10).

## Revendications

1. Procédé de fabrication d'un composite fibre-matière plastique avec un alignement sécurisé des fibres, dans lequel des fibres continues (16) ou des fibres longues sont alignées et enrobées d'une matrice, **caractérisé par** les étapes suivantes:
a) fournir un outil de moulage (2) comprenant au moins un canal d'écoulement (10),
b) introduire les fibres continues (16) ou les fibres longues dans au moins un canal d'écoulement (10),
c) positionner et aligner les fibres continues (10) ou les fibres longues dans au moins un canal d'écoulement (10) basé sur des outils au moyen d'un gradient de pression (Δp) dans le canal d'écoulement (10),
d) délivrer les fibres continues alignées (10) ou les fibres longues alignées à une station d'enrobage à l'extérieur de l'outil au moyen d'une pince plate, la pince plate saisissant les fibres continues (10) ou les fibres longues et les délivrant à la station d'enrobage de manière électrostatique, pneumatique, au moyen d'une pression négative ou par adhérence, et
e) enrober les fibres continues (16) ou les fibres longues avec une matrice.

2. Procédé selon la revendication 1, **caractérisé en ce que** les fibres continues (16) ou les fibres longues sont positionnées dans le canal d'écoulement (10) par un écoulement de fluide.

3. Procédé selon la revendication 1 ou la revendication 2, **caractérisé en ce que** l'orientation des fibres est fixée à l'intérieur de l'outil de moulage (2) ou à l'extérieur de l'outil de moulage (2) sur un substrat de support.

4. Procédé selon l'une des revendications 1 à 3, **caractérisé en ce que** les fibres continues (16) ou les fibres longues sont introduites dans plusieurs canaux d'écoulement (10).

5. Outil d'usinage (1), comprenant un outil de moulage (2) et au moins un canal d'écoulement (10) inséré dans l'outil de moulage (2), au moins une buse de fluide (12) étant assignée à chaque canal d'écoulement (10), la buse de fluide (12) comportant un réservoir de fibres (14) pour des fibres continues (16) ou des fibres longues, dans lequel une station d'enrobage et une pince plate pour saisir des fibres continues (16) ou des fibres longues alignées dans l'outil sont prévues, la pince plate étant conçue de telle sorte qu'elle saisit les fibres continues alignées (16) ou les fibres longues alignées de manière électrostatique, pneumatique, au moyen d'une pression négative ou par adhérence.

6. Outil d'usinage selon la revendication 5, **caractérisé en ce que** l'outil de moulage (2) comporte deux moitiés d'outil (3, 4), le canal d'écoulement (10) étant formé par les deux moitiés d'outil (3, 4).

7. Outil d'usinage selon la revendication 5 ou la revendication 6, **caractérisé en ce que** au moins un canal d'écoulement (10) spécifie l'alignement des fibres continues (16) ou des fibres longues provenant du réservoir de fibres (14).

8. Outil d'usinage selon l'une des revendications 5 à 7, **caractérisé en ce que** l'outil de moulage (2) comporte une pluralité de canaux d'écoulement (10).

9. Outil d'usinage selon l'une des revendications 5 à 8, **caractérisé en ce qu'**une pompe est assignée à au moins un canal d'écoulement (10).

10. Outil d'usinage selon la revendication 8 ou la revendication 9, **caractérisé en ce que** la buse de fluide (12) comporte une unité de déplacement et est déplaçable d'un canal d'écoulement (10) au canal d'écoulement (10) prochain.
